(19)

Europäisches Patentamt

European Patent Office

Office européen des brevets

(11) **EP 4 496 031 A1**

(12) **EUROPEAN PATENT APPLICATION**
published in accordance with Art. 153(4) EPC

(43) Date of publication:
**22.01.2025 Bulletin 2025/04**

(21) Application number: **22967015.3**

(22) Date of filing: **16.12.2022**

(51) International Patent Classification (IPC):
$H01M\ 4/525^{(2010.01)}$    $H01M\ 10/0525^{(2010.01)}$
$H01M\ 4/36^{(2006.01)}$    $H01M\ 4/505^{(2010.01)}$

(52) Cooperative Patent Classification (CPC):
**Y02E 60/10**

(86) International application number:
**PCT/CN2022/139467**

(87) International publication number:
**WO 2024/113430 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.12.2022 CN 202211523409**

(71) Applicant: **Sunwoda Mobility Energy Technology
Co., Ltd.
Shenzhen, Guangdong 518107 (CN)**

(72) Inventor: **OUYANG, Yunpeng
Shenzhen, Guangdong 518107 (CN)**

(74) Representative: **Qip Patentanwälte
Dr. Kuehn & Partner mbB
Bavariaring 10
80336 München (DE)**

(54) **POSITIVE ELECTRODE ACTIVE MATERIAL AND LITHIUM ION BATTERY**

(57)    Disclosed is a positive active material and a lithium ion battery. The positive active material includes a lithium nickel cobalt manganese oxide; in lithium nickel cobalt manganese oxide, based on the total molar content of the nickel element, the cobalt element and the manganese element being 100%, molar contents of manganese element being being denoted as m% and n% respectively, satisfying the following condition: 20<n+m<50, and 0.1<n/m<0.6; full width at half maximums of (003) peak and (104) peak of the positive active material being denoted as FWHW(003) and FWHW(104) respectively; FWHW(003) and FWHW(104) satisfying the following condition: 0.4≤FWHW(003)/FWHW(104)≤2.0. The present invention can inhibit the metal ion dissolution of the positive active material in the process of use, and improve the charging capacity, cycle life and safety performance of the battery. The invention can reduce microcracks of positive electrode particles in the positive electrode plate processing process, while ensuring the battery has better charging capacity, cycle life and safety performance.

EP 4 496 031 A1

**Description**

**CROSS-REFERENCE TO RELATED APPLICATION**

The present disclosure claims priority to Chinese Patent Application No 202211523409.2, filed by the applicant Sunwoda Electric Vehicle Battery Co., on December 1, 2022, with the title "Positive active material and lithium ion battery", the contents of which are incorporated herein by reference in its entirety.

**TECHNICAL FIELD**

The present disclosure relates to a positive active material and a lithium ion battery, belonging to the technical field of secondary batteries.

**BACKGROUND OF THE PRESENT DISCLOSURE**

In recent years, with the increasingly prominent environmental problems caused by traditional fuel vehicles, people urgently need a green, low-carbon, and sustainable alternative energy source for automobiles. Secondary batteries, such as lithium-ion batteries, have been widely used in recent years as a clean energy source due to their high energy density and long lifespan. Compared to traditional fuel vehicles, new energy vehicles powered by lithium-ion batteries require energy replenishment by charging lithium-ion batteries, and their charging time directly affects the user experience of new energy vehicles. Therefore, improving the charging rate of secondary batteries has always been an important research direction in the new energy industry.

**SUMMARY OF THE PRESENT DISCLOSURE**

The purpose of the present disclosure is to provide a positive active material, and using a lithium ion battery prepared by this positive active material can reduce the transition metal dissolution of the positive active material in the lithium ion battery, reduce the interaction between the sliding crack fresh interface and the electrolyte, and improve the charging capacity, cycle life and safety performance of the secondary battery.

The present disclosure provides a positive active material including a lithium nickel cobalt manganese oxide; in the lithium nickel cobalt manganese oxide, based on the total molar content of the nickel element, the cobalt element and the manganese element being 100%, a molar content of the manganese element is denoted as m%, a molar content of the cobalt element is denoted as n%, satisfying the following condition: 20<n+m<50, and 0.1<n/m<0.6; a full width at half maximum of (003) peak of the positive active material is denoted as FWHW(003), a full width at half maximum of (104) peak of the positive active material is denoted as FWHW(104); the FWHW(003) and the FWHW(104) satisfy the following condition: $0.4 \leq FWHW(003)/FWHW(104) \leq 2.0$.

Further, the molar contents of the manganese element and the cobalt element satisfy any one of the following conditions:

$$(i) 19 \leq m < 43.5;$$

$$(ii) 3.0 \leq n \leq 12;$$

$$(iii) 0.10 \leq n/m \leq 0.502.$$

Further, the positive active material further includes M element, the M element including Zr, and at least one element of Al, Mg, Ti, Y, Sr, Y, Mo, Nb, Sn, Ba, La, and Ce; and

based on the total molar content of the nickel element, the cobalt element and the manganese element is 100%, a percent ratio of a molar content of the M element to a total molar content of the nickel element, the cobalt element and the manganese element is denoted as x%, $0.1 \leq x \leq 2.5$.

More further, the M element includes Zr element, Al element, and at least one element of Mg, Ti, Y, Sr, Y, Mo, Nb, Sn, Ba, La, Ce, and W; a molar content of the M element is denoted as x%, a molar content of Zr is denoted as x1%, and a molar content of Al is denoted as x2%, and x, x1, and x2 satisfy any one of the following conditions:

$$(iv)\ 0.20 \leq x1 \leq 0.45;$$

$$(v)\ 0.15 \leq x2 \leq 1.5;$$

$$(vi)\ 0.2 \leq x1/x2 \leq 1;$$

$$(vii)\ 0 < (x-x1-x2)/x < 0.5.$$

A full width at half maximum of (003) peak of the positive active material of the present disclosure is denoted as FWHW(003), and a full width at half maximum of (104) peak of the positive active material of the present disclosure is denoted as FWHW(104);

the FWHW(003) ranges from 0.06 to 0.15°; and
the FWHW(104) ranges from 0.06 to 0.15°.

A peak area of (003) peak of the positive active material of the present disclosure is denoted as Ic(003), a peak area of (104) peak of the positive active material of the present disclosure is denoted as Ic(104), Kc is Ic(003)/Ic(104), and $1 \leq Kc \leq 2$.

The positive active material of the present disclosure includes $Li_a Ni_b Co_{m/100} Mn_{n/100} M_{x/100} O_2$, $0.80 \leq a \leq 1.10$, $0.4 < b < 0.8$, $20 < n+m < 50$, and $0.1 < n/m < 0.6$, $0.1 \leq x \leq 2.5$, and M includes Zr and at least one of Al, Mg, Ti, Y, Sr, Y, Mo, Nb, Sn, Ba, La, Ce, and W.

Based on the positive active material, the present disclosure also provides a secondary battery including a positive electrode; the positive electrode including a positive electrode current collector and a positive electrode composite agent layer disposed on the positive electrode current collector, the positive electrode composite agent layer being made of the positive active material; wherein

a peak area of (003) peak of the positive electrode composite agent layer is denoted as If(003), a peak area of (104) peak is denoted as If(104), Kf is If(003)/If(104), $10 \leq Kf \leq 20$, and $6 \leq Kf/Kc \leq 20$.

In the positive electrode composite agent layer, a ratio of particles formed from 1 micron to 3 microns is more than 60% of the total number of particles.

The uniformity of the particle size of the positive active material in the positive electrode composite agent layer has a significant effect on the charging performance of the battery. In the positive electrode composite agent layer, the more uniform of the particle size of the positive active material in the active material layer, the smaller the difference in current density between different particles under the charging condition of large current, indicating that, the depths of lithium deinsertion between different particles are consistent, polarization is reduced, and then the temperature rise of the battery is decreased, ensuring good charging capacity and service life of the battery.

## EMBODIMENTS

Experimental methods used in the examples described below are routine methods unless otherwise specified.

Materials, reagents, etc. used in the examples described below can be obtained through commercial sources unless otherwise specified.

A positive active material provided by the present disclosure includes a lithium nickel cobalt manganese oxide; in the lithium nickel cobalt manganese oxide, based on the total molar content of the nickel element, the cobalt element and the manganese element is 100%, a molar content of the manganese element is denoted as m%, a molar content of the cobalt element is denoted as n%, satisfying the following condition: $20 < n+m < 50$, and $0.1 < n/m < 0.6$; a full width at half maximum of (003) peak of the positive active material is denoted as FWHW(003), a full width at half maximum of (104) peak of the positive active material is denoted as FWHW(104); the FWHW(003) and the FWHW(104) satisfy the following condition: $0.4 \leq FWHW(003)/FWHW(104) \leq 2.0$. For example, the value of FWHW(003)/FWHW(104) can be any value of 0.4, 0.5, 0.6, 0.7, 0.8, 0.9, 0.99, 1.0, 1.1, 1.3, 1.5, 1.8, 2.0 or a range consisting of any two values thereof.

According to some embodiments of the present disclosure, $22 < n+m < 48$, and $0.103 < n/m < 0.502$.

According to some embodiments of the present disclosure, the full width at half maximum of (003) peak of the positive active material is denoted as FWHW(003), the full width at half maximum of (104) peak of the positive active material is denoted as FWHW(104), and $0.4 \leq FWHW(003)/FWHW(104) \leq 1.5$. When the FWHW(003)/FWHW(104) of the positive active material is within the above range, the crystal structure of the positive active material can have a high stability, and thus the charging capacity, cycle life and safety performance of the secondary battery can be improved. According to some embodiments of the present disclosure, $0.5 \leq FWHW(003)/FWHW(104) < 1$. When the FWHW(003)/FWHW(104) of the positive active material is within the above range, it indicates that the residual stress inside the crystal lattice of the particles of the positive active material is low or the mixing rate of lithium ions and transition metal ions is low, and the residual stress or the ion mixing inside the lattice can cause atoms in the lattice to deviate from the equilibrium position, cause a higher value in either FWHW (003) or FWHW (104) and changes in the FWHW (003)/FWHW (104) ratio. The residual stress or ion mixing inside the lattice can lead to an increase in the potential barrier for lithium ions to detach from the positive active material, reducing the charging capacity of the battery.

In the positive active material, the manganese element and cobalt element can stabilize the structural stability of the lithium nickel cobalt manganese oxide during the lithium removal process, providing support for the material structure. When the manganese element and cobalt element are too high, the proportion of nickel element involved in the electrochemical reaction decreases, resulting in a decrease in the energy density of the lithium nickel cobalt manganese oxide. Nickel element and manganese element are prone to migration to tetrahedral vacancies in the lattice during charging, leading to lattice distortion of the positive active material and disrupting the stability of the material lattice. At the same time, the nickel and manganese ions in tetrahedral vacancies also migrate and dissolve into the electrolyte under the action of an electric field. Dissolved nickel and manganese ions (especially manganese ions) are prone to reduction at the negative electrode, damaging the surface protective film of the negative electrode, causing an increase in impedance, increasing the risk of lithium evolution, and reducing the battery's charging capacity, cycle life, and safety performance. The presence of cobalt element in the positive active material can inhibit the migration of nickel and manganese ions to tetrahedral vacancies in the lattice during charging. However, a high cobalt content can lead to a decrease in the capacity of the positive active material. At the same time, cobalt element is a rare metal species in the crust, and the high cobalt element content can also increase the cost of the positive active material. By controlling the element content of nickel, cobalt, and manganese, and the stability of the formed positive active material crystals, the above problems can be effectively improved.

According to some embodiments of the present disclosure, $19 \leq m < 43.5$. For example, m can be any value of 19, 20, 21, 23, 25, 27, 27.5, 28, 30, 32, 33, 34, 37, 39, 40, 42, 43.5, or a range consisting of any two values thereof.

According to some embodiments of the present disclosure, $20 \leq m \leq 33$.

According to some embodiments of the present disclosure, $20 \leq m \leq 30$. When m is in the above range, the crystal structure of the positive active material can be further optimized, enabling the positive active material more stable.

According to some embodiments of the present disclosure, $3 \leq n \leq 12$. For example, n can be any value of 3, 4.5, 5, 7, 8, 9, 10, 11, 12, 14, or a range consisting of any two values thereof.

According to some embodiments of the present disclosure, $4.5 \leq n \leq 9$.

According to some embodiments of the present disclosure, $0.10 \leq n/m \leq 0.502$. For example, n/m can be any value of 0.10, 0.15, 0.18, 0.20, 0.22, 0.25, 0.28, 0.30, 0.32, 0.35, 0.38, 0.40, 0.42, 0.45, 0.48, 0.502, or a range consisting of any two values thereof. When n/m is in this range, the crystal structure of the positive active material can be further controlled, enabling the performance of the secondary battery better.

According to some embodiments of the present disclosure, $0.15 \leq n/m \leq 0.35$.

According to some embodiments of the present disclosure, the positive active material further includes M element, the M element including at least one element of Zr, Al, Mg, Ti, Y, Sr, Y, Mo, Nb, Sn, Ba, La, Ce, and W. Suitable M element can form a chemical bond with an oxygen of the lithium nickel cobalt manganese oxide, improving the stability of the metal and the oxytic octahedral structure of the lithium nickel cobalt manganese oxide. At the same time, in the case of quick charging, the dissolution of the translation metal on the negative electrode may be decreased and the release of the crystal oxygen in the positive active material would lead to security risks.

According to some embodiments of the present disclosure, the M element includes Zr element, and at least one element of Al, Mg, Ti, Y, Sr, Y, Mo, Nb, Sn, Ba, La, and Ce. The bond energy of the chemical bond formed by Zr element with oxygen is much greater than the chemical energy formed by elements nickel, cobalt and manganese with oxygen, and thus the addition of M element including Zr can further improve the stability of the metal and oxygen octahedral structure in the lithium nickel cobalt manganese oxide.

According to some embodiments of the present disclosure, the M element includes W element, and at least one element of Zr, Al, Mg, Ti, Y, Sr, Y, Mo, Nb, Sn, Ba, La, and Ce.

According to some embodiments of the present disclosure, the M element includes Zr element and Al element, and at least one element of Mg, Ti, Y, Sr, Y, Mo, Nb, Sn, Ba, La, Ce, and W. The bond energy of the chemical bond formed by Al element with oxygen in the lithium nickel cobalt manganese oxide in positive active material is less than Zr element. However, Al element after bonding is beneficial to improve the migration energy of nickel ions in the lithium nickel cobalt manganese oxide to the location of the lattice lithium, reduce the proportion of nickel ions at the location of the lattice lithium, improve the lithium-ion migration rate, and further reducing the charging capacity of the battery.

According to some embodiments of the present disclosure, the M element includes Zr element and W element, and at least one element of Al, Mg, Ti, Y, Sr, Y, Mo, Nb, Sn, Ba, La, and Ce.

According to some embodiments of the present disclosure, based on the total molar content of the nickel element, the cobalt element and the manganese element being 100%, the ratio of the molar amount molar content of the M element to the total molar content of the nickel element, the cobalt element and the manganese element is x%, and $0.1 \leq x \leq 2.5$. For example, x can be any value of 0.1, 0.3, 0.5, 0.7, 0.9, 1.0, 1.1, 1.3, 1.5, 1.7, 1.9, 2.0, 2.2, 2.4, 2.5 or a range consisting of any two values thereof. By adjusting the content of the M element, the metal dissolution and lattice oxygen release can be effectively reduced, and the charging capacity, service life and safety performance of the battery can be further improved.

According to some embodiments of the present disclosure, $0.2 \leq x \leq 1.5$. In the case of rapid charging, the lithium nickel cobalt manganese oxide will undergo the dissolution of the transition metals nickel and manganese, resulting in the reduction of the stability of the positive active material structure and the destruction of the protective film on the surface of the negative electrode plate, and reducing the charging capacity and service life of the battery. The precipitation of transition metals on the negative electrode side and the release of lattice oxygen can lead to safety risks. When the M element content is in the above range, it can ensure the stability of the positive active material structure while reduce the impact on the available capacity of positive active material, and make the battery have high capacity, excellent charging capacity, service life and safety performance.

According to some embodiments of the present disclosure, the M element includes Zr element and Al element, and at least one element of Mg, Ti, Y, Sr, Y, Mo, Nb, Sn, Ba, La, Ce, and W; wherein, the molar content of the M element is denoted x%, the molar content of Zr is denoted as x1%, and the molar content of Al is denoted as x2%.

According to some embodiments of the present disclosure, $0.20 \leq x1 \leq 0.45$. For example, x1 can be any value of 0.20, 0.22, 0.24, 0.25, 0.27, 0.29, 0.30, 0.32, 0.34, 0.36, 0.39, 0.40, 0.42, 0.44, 0.45 or a range consisting of any two values thereof. The addition of the Zr element can effectively reduce the metal dissolution and lattice oxygen release, and improve the charging capacity, service life and safety performance of the battery.

According to some embodiments of the present disclosure, $0.24 \leq x1 \leq 0.42$.

According to some embodiments of the present disclosure, $0.15 \leq x2 \leq 1.5$. For example, x2 can be any value of 0.15, 0.20, 0.25, 0.3, 0.32, 0.35, 0.37, 0.40, 0.45, 0.47, 0.50, 0.53, 0.57, 0.59, 0.60, 0, 63, 0.65, 0.68, 0.70, 0.73, 0.75, 0.78, 0.80, 0.85, 0.90, 0.93, 0.95, 1.0, 1.2, 1.5 or a range consisting of any two values thereof. By controlling the addition of the Al element, it can effectively reduce the metal dissolution and lattice oxygen release, and improve the charging capacity, service life and safety performance of the battery.

According to some embodiments of the present disclosure, $0.25 \leq x2 \leq 1.2$.

According to some embodiments of the present disclosure, $0.3 \leq x2 \leq 0.95$.

According to some embodiments of the present disclosure, $0.2 \leq x1/x2 \leq 1$. For example, x1/x2 can be any value of 0.20, 0.25, 0.3, 0.32, 0.35, 0.37, 0.40, 0.45, 0.47, 0.50, 0.53, 0.57, 0.59, 0.60, 0.63, 0.65, 0.68, 0.70, 0.73, 0.75, 0.78, 0.80, 0.85, 0.90, 0.93, 0.95, 1.0 or a range consisting of any two values thereof. When the content of the Al element is controlled to be greater than or equal to that of the Zr element, and the ratio of the two elements is in the above range, the ratio of lattice lithium inside the positive active material and the stability of the crystal structure can be ensured, making the crystal structure of positive active material in a better state, and then, the comprehensive performance of the battery can be further improved.

According to some embodiments of the present disclosure, $0 < (x-x1-x2)/x < 0.5$. For example, (x-x1-x2)/x can be any value of 0.001, 0.05, 0.1, 0.13, 0.15, 0.18, 0.20, 0.25, 0.3, 0.32, 0.35, 0.37, 0.40, 0.45, 0.47, 0.50 or a range consisting of any two values thereof. When the M element further includes an another element in addition to the Al element and the Zr element, and the content is in the above range, the positive active material crystal structure can be further optimized, so that the battery has a better comprehensive performance.

According to some embodiments of the present disclosure, $0.1 \leq (x-x1-x2)/x \leq 0.42$. When the above range is satisfied, the comprehensive performance of the positive active material is better.

According to some embodiments of the present disclosure, a full width at half maximum of (003) peak of the positive active material is denoted as FWHW(003), and the FWHW(003) ranges from 0.06 to 0.15°. For example, FWHW(003) can be any value of 0.06°, 0.07°, 0.09°, 0.10°, 0.12°, 0.14°, 0.15° or a range consisting of any two values thereof.

According to some embodiments of the present disclosure, a full width at half maximum of the (104) peak of the positive active material is denoted as FWHW(104), and the FWHW(104) ranges from 0.06 to 0.15°. For example, FWHW(104) can be any value of 0.06°, 0.07°, 0.09°, 0.10°, 0.12°, 0.14°, 0.15° or a range consisting of any two values thereof.

The full width at half maximum FWHW of the characteristic peak of the positive active material represents the peak width at half the height of the characteristic peak after deducting the dorsal base of the XRD curve as well as K$\alpha$2, in degree °. The scanning speed of XRD is 2°/min. When the full width at half maximums FWHM of the (003) and (104) characteristic peaks are less than 0.15°, it shows that the crystal form of the positive active material is intact and highly crystalline. If the full width at half maximums FWHM of (003) characteristic peak and (104) characteristic peak are greater than 0.15°, it indicates that the positions of some atoms in the positive active material deviate from the position of the ideal crystal, indicating that the crystallization of the material is poor, which will reduce the service life of the material. However, when the full width at half maximum FWHM is less than 0.06°, it indicates that positive active material is not only well crystalline, but also has a large grain size. The large grain size makes the migration distance of lithium ions in the positive active material body phase become longer during the charging process, resulting in a lower charging capacity of the battery. Therefore, the full width at half maximums of the characteristic peaks (003) and (104) of the positive active material should be in an appropriate range to ensure that the battery has a better service life and charging capacity.

According to some embodiments of the present disclosure, the FWHW(003) ranges from 0.07 to 0.098°.

According to some embodiments of the present disclosure, the FWHW(003) ranges from 0.09 to 0.12°.

According to some embodiments of the present disclosure, a peak area of (003) peak of the positive active material is denoted as Ic(003), a peak area of (104) peak of the positive active material is denoted as Ic(104), Kc is Ic(003)/Ic(104), and $1 \leq Kc \leq 2$. For example, Kc can be any value of 1, 1.1, 1.2, 1.3, 1.35, 1.4, 1.45, 1.48, 1.5, 1.52, 1.54, 1.56, 1.58, 1.6, 1.63, 1.65, 1.67, 1.7, 1.73, 1.75, 1.78, 1.8, 1.85, 1.9, 2.0 or a range consisting of any two values thereof.

Kc can reflect the crystallinity of the positive active material. When the value of Kc of the positive active material is in a range from 1.0 to 2.0, it indicates that the positive active material is well crystalline and has few defects inside the material. When Kc is below 1.0, the crystallinity of the positive active material is poor, and there are many internal defects, which will affect the structural stability of the positive active material. It may lead to a low capacity of the battery and the obstruction of lithium ion stripping, and thus affect the fast charging capacity and long-term life of the material.

According to some embodiments of the present disclosure, $1.3 \leq Kc \leq 1.7$.

The positive active material provided by the present disclosure can be prepared by the following method.

1) A precursor $Ni_bCo_m/_{100}Mn_n/_{100}(OH)_2$, a lithium salt, an additive A1 containing an adding metal element M1 are added in a mixing equipment for thorough mixing. A ratio of lithium in the lithium salt to the ternary material precursor $Ni_bCo_m/_{100}Mn_n/_{100}(OH)_2$ is a: $1.95 \leq a \leq 1.2$, and the lithium salt can be lithium carbonate, lithium hydroxide, or other compound that can provide lithium element. M1 can be selected from one or more of Mg, Al, Ti, Y, Sr, Zr, Mo, Nb, Sn, Ba, La, and Ce, and M1 at least includes Zr element. The additive A1 is an oxide containing the adding element M1, hydroxide containing the adding element M1, or other compound containing the adding element M1.

2) The mixed material is loaded into a sagger and the sagger is placed in an atmosphere furnace for sintering. The temperature in a heating zone is in range of 25 °C-950 °C, and the sintering temperature in a constant temperature zone is in a range of 800-1000 °C. A total sintering time in the heating zone and constant temperature zone is 15-40 hours. During the sintering process, pure oxygen is introduced to ensure that the oxygen concentration in the furnace is in a range of 20% to 99%. The ratio of Kc of the characteristic peaks Ic (003)/Ic (104), the full width at half maximums of the (003) and (104) characteristic peaks of the positive active material, and the full width at half maximums of the (003) and (104) characteristic peaks of the positive active material, as well as the particle size and uniformity of the positive active material can be controlled by controlling the filling amount of the positive active material in the sagger, the heating system in the heating zone, the sintering temperature in the heating zone and constant temperature zone, and the time and atmosphere.

3) The positive active material obtained after sintering is subjected to roller and airflow crushing. The size distribution of the positive active material particles can be controlled by controlling the parameters of airflow crushing, such as the diameter of the inlet nozzle, feeding frequency, induced air frequency, air pressure, and material weight in the silo.

4) The crushed positive active material and additive A2 containing an adding element M2 in the mixing equipment for thorough mixing. M2 can be selected from one or more of Mg, Al, Ti, Y, Sr, Zr, Mo, Nb, Sn, Ba, La, and Ce, and additive A2 is an oxide containing adding the element M2, a hydroxide containing adding the element M2,, or other compound containing the adding element M2.

5) The uniformly mixed mixture of the positive active material and the additive was placed in a kiln for secondary sintering to obtain the finished positive active material. The sintering temperature is 350-850 °C, and the sintering time is 5-20 hours. The secondary sintering can repair the surface of the damaged positive electrode particles during the crushing process, reduce the residual alkali of the material, and form a protective layer with a certain thickness on the surface.

Based on the positive active material, the present disclosure further provides a secondary battery including a positive electrode; wherein the positive electrode includes a positive electrode current collector and a positive electrode composite agent layer disposed on the positive electrode current collector, and the positive electrode composite agent layer is made of the positive active material.

According to some embodiments of the present disclosure, the peak area of (003) peak of the positive electrode composite agent layer is denoted as If(003), the peak area of (104) peak of the positive electrode composite agent layer is denoted as If(104), Kf is If(003)/If(104), and $10 \leq Kf \leq 20$. For example, Kf can be any value of 10, 11, 12, 13, 13.3, 13.5, 13.7, 14, 14.5, 14.7, 15, 15.3, 15.5, 15.7, 16, 16.3, 16.5, 16.7, 17, 17.5, 18, 19, 20 or a range consisting of any two values thereof.

The value of Kf represents preferred orientation of the positive active material in the the positive electrode composite agent layer. The ratio $Kf \geq 20$ indicates that the preferred orientation is severe, which indicates a significant slip of the crystal surface of positive active material during the preparation of the positive electrode composite agent layer. This slip can cause cracks on the surface of the positive electrode particles, leading to poor stability of the material, prone to metal dissolution and side reactions with the interface. And the larger the Kf, the closer the angle between the lithium ion release direction and the electric field direction is to 90 °, which is not conducive to the release of lithium ions and reduces the charging capacity of the battery. At Kf ≤10, the positive electrode powder and the conductive agent have poor bonding effect, resulting in high internal resistance of the battery. During the charging process, the ohmic polarization of the lithium ion battery is large, which reduces the charging capacity of the battery.

According to some embodiments of the present disclosure, 13≤Kf≤17. When Kf is in this range, the orientation of the positive active material in the positive electrode composite agent layer is distributed in a more appropriate range, enabling the battery charging capacity better.

According to some embodiments of the present disclosure, 6≤Kf/Kc≤20. For example, Kf/Kc can be any value of 6, 7, 8, 8.5, 9, 9.3, 9.5, 9.7, 10, 10.3, 10.5, 10.7, 11, 11.3, 11.5, 11.7, 12, 12.5, 13, 13.5, 13.7, 14, 14.5, 14.7, 15, 15.5, 16, 17, 19, 20 or a range consisting of any two values thereof.

Kf/Kc further represents preferred orientation of the positive active material in the positive electrode composite agent layer. The higher Kf/Kc indicates an increase in the parallel ratio of the (003) crystal surface to the substrate plane in particles of the positive active material. For a fast-charging battery, the lithium embedding capacity of the cathode material is the decisive factor that limits the charging capacity of the material. Appropriate reduction of the dynamics of the positive active material is conducive to improving the comprehensive charging capacity of the battery and reducing the safety risks brought by lithium precipitation of the lithium battery. By increasing the Kf /Kc of the particles of the positive active material, the migration of more lithium ions in the particles of the positive active material is parallel to the direction of the internal electric field of the battery, which will increase the difficulty of lithium ion de-intercalation from the positive electrode and is conducive to the intercalation of the lithium ion in the negative electrode. However, too high Kf/Kc will lead to the increase of lithium ion battery polarization during the rapid charging process and the increase of temperature rise caused by charging, and will lead to the destruction of the positive active material structure due to the intensified reaction with the electrolyte. Therefore, Kf/Kc should be within the range of 6 to 20.

According to some embodiments of the present disclosure, 8≤Kf/Kc≤14. When Kf/Kc is in the range, the parallel ratio of the (003)crystal surface in the positive active material particle and the substrate plane is in an appropriate range, which can ensure that the battery has a better charging capacity and the battery polarization is in an appropriate range, so that the battery has a better comprehensive performance.

In the positive electrode composite agent layer, the number of particles formed by the positive active material ranging from 1 micron to 3 micron accounts for more than 60% of the total number of particles. For example, it can be any value of 61%, 63%, 65%, 67%, 70%, 73%, 75%, 78%, 80%, 83%, 85%, 87%, 90% or a range consisting of any two values thereof.

The uniformity of the particle size of the positive electrode active material in the positive electrode composite agent layer has a significant effect on the charging performance of the battery. The more uniform of the particle size of the positive electrode active material in the positive electrode composite agent layer, the smaller the difference in current density between different particles under the charging condition of large current, that is, the depths are consistent between different particles, polarization is reduced, and then the temperature rise of the battery is decreased, ensuring that the battery has a good charging capacity and service life.

**Example 1**

(1) Preparation of a positive active material

Step 1: A positive active material precursor $Ni_{0.52}Co_{0.045}Mn_{0.435}(OH)_2$ and lithium carbonate were placed in a mixing equipment for thorough mixing. The molar ratio of lithium in lithium carbonate to the precursor was 1.04: 1.

Step 2: The mixed material was placed in an atmosphere furnace for sintering, and the sintering time in the heating zone was 6 hours. The sintering temperature in the constant temperature zone was 990 °C, and the sintering time in the constant temperature zone was 12 hours. During the sintering process, the atmosphere in the constant temperature zone was oxygen atmosphere, and the oxygen concentration in the constant temperature zone of the atmosphere furnace was 30%..

Step 3: The positive active material obtained after sintering was crushed by a pair of rollers, and then crushed by airflow.

Step 4: The broken positive active material was mixed in a high-speed mixer with a mixing frequency of 40Hz and a mixing time of 20min.

Step 5: The mixed positive active material was placed in a kiln for secondary sintering to obtain a finished product positive active material. The sintering temperature was 550 °C, and the sintering time was 6 hours.

A full width at half maximum FWHW (003) of the (003) peak of the synthesized positive active material was 0.088°, and a full width at half maximum FWHW (104) of (104) peak of the synthesized positive active material was 0.097°. A peak area of (003) peak of the synthesized positive active material was Ic (003), and A peak area of (104) peak was Ic (104), Kc=Ic(003)/Ic(104), and Kc=1.66.

(2) Preparation of a positive electrode plate

Step 1: The above-mentioned positive active material, a binder polyvinylidene fluoride, a conductive agent acetylene black, and a conductive agent carbon nanotube were fully mixed in a mass ratio of 97:1.5:1:0.5. N-methylpyrrolidone (NMP) was added to the resulting mixture, stirred uniformly under the action of a mixer, to obtain a positive electrode slurry in which the positive active material, binder and conductive agent were dispersed uniformly. The positive electrode slurry was coated on an aluminum foil with a thickness of 12 microns. After coating one side, the other side was coated, and the density of the coated surface after deducting the weight of aluminum foil was 16 mg/cm$^2$.

Step 2: The coated plates were dried in an oven at 100 °C to 130°C.

Step 3: The dried plates were rolled by controlling the pressure, speed, temperature of the roller bar, and number of rolls. An X-ray diffraction testing was performed on the positive electrode composite agent layer. A peak area of (003) peak of the positive electrode composite agent layer was If (003), and A peak area of (104) peak of the positive electrode composite agent layer was If (104), Kf=If(003)/If(104), and Kf 15.74.

(3)Preparation of a negative electrode plate

A negative active material, a thickener carboxymethyl cellulose sodium, a binder styrene-butadiene rubber, and a conductive agent acetylene black were mixed in the mass ratio of 96:0.8:1.2:2, followed by the addition of the deionized water, and under the action of the mixer to obtain a negative electrode slurry in which the negative active material, the agent carboxymethylcellulose sodium, the binder styrene-butadiene rubber, and the conductive agent acetylene black were dispersed uniformly. The negative electrode slurry was coated on a copper foil of a certain thickness, and the surface density of aluminum foil was 7.37mg/cm$^2$. The coated electrode plate was transferred to 100 to 120 °C oven for drying. The other side of the electrode plate was coated with the same surface density, followed by cold pressing and slitting to obtain the negative electrode plate.

(4) Preparation of an electrolyte:

An organic solvent is a mixed solution containing ethyl carbonate (EC), methyl ethyl carbonate (EMC) and diethyl carbonate (DEC) at a mass ratio of 1:1:1. The electrolyte was obtained by dissolving a lithium salt $LiPF_6$ in the organic solvent and mixing well. The concentration of the lithium salt was 1.0mol/L.

(5)Preparation of a separator:

A polyethylene separator with a thickness of 12 μm was selected for use.

(6)Preparation of a battery:

The positive electrode plate, the separator, the negative electrode plate were laminated to make the separator separate the positive electrode plate from the negative electrode plate, then were wound to form a square electrode assembly and placed in a package case, then baked to remove water, injected with the corresponding non-water electrolyte, vacuum packaged, and after the working procedures of standing, hot and cold pressing, formation and capacity grading etc. , a finished battery was obtained.

**Example 2**

All other steps were the same as those of Example 1, except that in the preparation of the positive active material, the precursor was $Ni_{0.78}Co_{0.03}Mn_{0.19}(OH)_2$ and the lithium salt was lithium hydroxide in step 1, and the sintering temperature was 910°C in step 2.

**Example 3**

All other steps were the same as those of Example 1, except that in the preparation of the positive active material, the precursor was $Ni_{0.55}Co_{0.12}Mn_{0.33}(OH)_2$ in step 1, and the sintering temperature in the constant temperature zone was 945°C in step 2.

**Example 4**

All other steps were the same as those of Example 3, except that in the preparation of the positive active material, the precursor was $Ni_{0.60}Co_{0.10}Mn_{0.30}(OH)_2$ in step 1.

**Example 5**

All other steps were the same as those of Example 4, except that in step 1 of preparation of a positive active material, a zirconia additive accounting for 0.4% of the total molar amount of metal elements other than lithium in the positive electrode active material was added.

**Example 6**

All other steps were the same as those of Example 4, except that a zirconia additive accounting for 2.9% of the total molar amount of metal elements other than lithium in the positive electrode active material was added in step 1 of the preparation of the positive active material.

**Example 7**

All other steps were the same as those of Example 4, except that in the preparation of the positive active material, a zirconia additive accounting for 0.4% of the total molar amount of metal elements other than lithium in the positive electrode active material was added in step 1; the broken positive active material and an alumina additive accounting for 0.5% of the total molar amount of metal elements other than lithium in the positive electrode active material were fully mixed in step 4.

**Example 8**

All other steps were the same as those of Example 4, except that in the preparation of the positive active material, a zirconia additive accounting for 0.4% and a strontia additive accounting for 0.1%, of the total molar amount of metal elements other than lithium in the positive electrode active material, were added in step 1; the broken positive active material and an alumina additive accounting for 0.5% of the total molar amount of metal elements other than lithium in the positive electrode active material were fully mixed in step 4.

**Example 9**

All other steps were the same as those of Example 4, except that in the preparation of the positive active material, a zirconia additive accounting for 0.4% a strontia additive accounting for 0.1% of the total molar amount of metal elements other than lithium in the positive electrode active material were added in step 1; the broken positive active material and an alumina additive accounting for 0.5% and a tungsten oxide additive accounting for 0.2% of the total molar amount of metal elements other than lithium in the positive electrode active material were fully mixed in step 4.

**Example 10**

All other steps were the same as those of Example 4, except that in the preparation of the positive active material, the precursor was $Ni_{0.58}Co_{0.14}Mn_{0.28}(OH)_2$, and a zirconia additive accounting for 0.3% of the total molar amount of metal elements other than lithium in the positive electrode active material was added in step 1; the broken positive active material and an alumina additive accounting for 0.4% and a titanium oxide additive accounting for 0.2% of the metal elements other than lithium in the positive electrode active material were fully mixed in step 4.

**Example 11**

All other steps were the same as those of Example 4, except that in the preparation of the positive active material, the precursor was $Ni_{0.635}Co_{0.09}Mn_{0.275}(OH)_2$, the lithium salt was lithium hydroxide, and a zirconia additive accounting for 0.3% and a strontia additive accounting for 0.1% and a barium oxide additive accounting for 0.1% of the total molar amount of metal elements other than lithium in the positive electrode active material were added in step 1; the broken positive active material and an alumina additive accounting for 0.9% and a tungsten oxide additive accounting for 0.1% of the total molar amount of metal elements other than lithium in the positive electrode active material were fully mixed in step 4.

**Example 12**

All other steps were the same as those of Example 4, except that in the preparation of the positive active material, the precursor was $Ni_{0.68}Co_{0.09}Mn_{0.27}(OH)_2$, the lithium salt was lithium hydroxide, a zirconia additive accounting for 0.3% and a strontia additive accounting for 0.1% and a barium oxide additive accounting for 0.1% of the total molar amount of metal elements other than lithium in the positive electrode active material were added in step 1; the sintering temperature in the constant temperature zone was 935°C in step 2; the broken positive active material and an alumina additive accounting for 1.1% and a tungsten oxide additive accounting for 0.2% of the total molar amount of metal elements other than lithium in the positive electrode active material were fully mixed in step 4.

**Example 13**

All other steps were the same as those of Example 4, except that in the preparation of the positive active material, the precursor was $Ni_{0.72}Co_{0.05}Mn_{0.23}(OH)_2$, the lithium salt was lithium hydroxide, a zirconia additive accounting for 0.3% and a strontia additive accounting for 0.1% and a barium oxide additive accounting for 0.1% of the total molar amount of metal elements other than lithium in the positive electrode active material were added in step 1; the sintering temperature in the constant temperature zone was 910°C in step 2; the broken positive active material and an alumina additive accounting for 0.7% and a tungsten oxide additive accounting for 0.2% of the total molar amount of metal elements other than lithium in the positive electrode active material were fully mixed in step 4.

**Example 14**

All other steps were the same as those of Example 4, except that in the of preparation of the positive active material, a zirconia additive accounting for 0.15% and a strontia additive accounting for 0.75% of the total molar amount of metal elements other than lithium in the positive electrode active material were added in step 1; the broken positive active material and an alumina additive accounting for 0.1% of the total molar amount of metal elements other than lithium in the positive electrode active material were fully mixed in step 4.

Example 15

All other steps were the same as those of Example 9, except that in the preparation of the positive active material, the sintering temperature was 980°C and the sintering time was 24 hours in the constant temperature zone in step 2.

Example 16

All other steps were the same as those of Example 9, except that in the preparation of the positive active material, the sintering temperature was 925°C and the sintering time was 7 hours in the constant temperature zone in step 2.

Example 17

All other steps were the same as those of Example 9, except that in the preparation method of the positive active material, the sintering temperature was 980°C and the sintering time was 24 hours in the constant temperature zone in step 2; and the crushing parameters are adjusted in step 3.

Examples 18 to 21

All other steps were the same as those of Example 15, except that the rolling parameters in the preparation of the positive electrode plate in step 3 were adjusted.

**Comparative Example 1**

All other steps were the same as those of Example 1, except that the positive active material was $Ni_{0.46}Co_{0.04}Mn_{0.50}(OH)_2$.

**Comparative Example 2**

All other steps were the same as those of Example 1, except that the positive active material was $Ni_{0.60}Co_{0.03}Mn_{0.37}(OH)_2$.

**Comparative Example 3**

All other steps were the same as those of Example 1, except that the positive active material was $Ni_{0.82}Co_{0.03}Mn_{0.15}(OH)_2$ and the lithium salt was lithium hydroxide in step 1.

The specific experimental parameters and battery electrochemical properties of Examples 1 to 21 as well as Comparative Examples 1 to 3 are shown in Table 1, Table 2 and Table 3.

The tested parameter methods for the positive active material and composite agent layer materials in Table 1 and Table 2 are as follows:

1. The testing method for the FWHW (003) which is the full width at half maximum of the (003) diffraction peak of positive active material powder and FWHW (104) which is the full width at half maximum of the diffraction peak of (104) of positive active material powder is as follows:

FWHW (003) which is the full width at half maximum of the (003) diffraction peak of positive active material powder and FWHW (104) which is the full width at half maximum of the diffraction peak of (104) of positive active material powder can be obtained by using an X-ray powder diffraction instrument (X'pert PRO), according to the general rule of X-ray diffraction analysis JIS K 0131-1996, obtaining a X-ray diffraction map, excluding the back base of the X-ray diffraction map and K$\alpha$2. FWHW (003) is the peak width at half of the height of the characteristic diffraction peak of (003), FWHW (104) is the peak width at half of the height of the characteristic diffraction peak (104), and the unit is °.

2. The test method for the ratio Kc of the peak area of the diffraction peak (003)of the positive electrode active material to the peak area of the diffraction peak (104) of the positive electrode active material is as follows.

The Kc value of the powder of the positive electrode active material can be obtained by using an X-ray powder diffractometer (X'pert PRO). According to the general principle of X-ray diffraction analysis JIS K 0131-1996, an X-ray diffraction pattern is obtained, where Kc=I(003)/I (104), I(003) is the peak area of the (003) characteristic diffraction peak and I (104) is the peak area of the (104) characteristic diffraction peak. Specifically, the testing method for the Kc value of a positive electrode active material powder is to place a certain quality of the positive electrode active material powder in an X-ray powder diffractometer, and obtain the peak area of (003) crystal plane diffraction peak and (104) crystal plane diffraction peak through X-ray diffraction analysis, thereby obtaining the Kc value of the positive electrode active material powder.

3. The test method for the ratio Kc of the peak area Ic(003) of the (003) diffraction peak in the positive electrode composite agent layer to the peak area Ic(104)of the (104)diffraction peak in the positive electrode composite agent layer is as follows.

The Kf value of the powder of the positive electrode composite agent layer can be obtained by using an X-ray powder diffractometer (X'pert PRO). According to the general principle of X-ray diffraction analysis JIS K 0131-1996, an X-ray diffraction pattern is obtained, where Kc=I(003)/I (104), I(003) is the peak area of the (003) characteristic diffraction peak and I (104) is the peak area of the (104) characteristic diffraction peak. Specifically, the testing method for the Kf value of a the positive electrode composite agent layer is to place the positive electrode plate directly in an X-ray powder diffractometer, and obtain the peak area of (003) crystal plane diffraction peak and (104) crystal plane diffraction peak through X-ray diffraction analysis, thereby obtaining the powder Kf value of the positive electrode composite agent layer.

The test methods for the electrochemical performance of the batteries presented in Table 3 are as follows.

1. Gram capacity test of a positive electrode active material

Under a testing environment of 25 °C$\pm$ 3 °C, the lithium ion batteries prepared by the examples and the comparative examples were charged at a rate of 1/3C to 4.35V, and discharged at a rate of 1/3C to 2.80V. the discharge capacity were recorded. The gram capacity of the positive active material is obtained by dividing the discharge capacity by the mass of the active material in the positive electrode plate. The higher the gram capacity of the positive active material, the higher the energy density that the battery can provide, and the better the performance of the battery.

2. Capacity retention test for 1000 cycles of battery cycling

At 25 °C$\pm$ 3 °C, the lithium ion batteries prepared by the examples and the comparative examples were charged at a rate of 1C to 4.35V, and discharged at a rate of 1C to 2.80 for 1000 cycles. The charging and discharging capacities for each cycle were recorded, and the discharge capacity of the 1000th cycle was compared to the discharge capacity of the previous cycle. The ratio obtained is the capacity retention rate of the battery after 1000 cycles. The higher the cycling capacity retention rate of a battery, the stronger its ability to resist capacity decay, and the better its performance.

3. Test on the total amount of Mn and Ni ions released from the negative electrode of a battery after 1000 cycles of cycling

The lithium ion batteries prepared by the examples and the comparative examples were cycled according to a charge/discharge manner of charging at a rate of 1C to 4.35V and discharging at a rate of 1C to 2.80 for 1000 cycles, and then the batteries are discharged at a rate of 1C to 2.80V. After the batteries are disassembled, the negative electrodes are removed from the battery, soaked in DMC for 12 hours, to remove any remaining impurities on the surface of the negative electrodes, and baked in an 80 °C oven for 2 hours to remove DMC and any remaining electrolyte. Then, EPA6010D inductively coupled plasma atomic emission spectrometry is used to test the contents of Mn element and Ni element in the negative electrode plate. The sum of these two contents is the total amount of Mn and Ni ions dissolved from the negative electrode plate after 1000 cycles of battery cycling. The lower the total amount of Mn and Ni ions released from the negative electrode plate, the more stable the structure of the positive electrode material, and the corresponding battery also has a longer service life.

4. Impedance increase amplitude test for 1000 cycles of battery cycling

At 25°C$\pm$2°C, the lithium ion batteries prepared by the examples and the comparative examples are discharged to 2.8V at a rate of 1C, charged to 4.35V at a rate of 1C, then discharged to 2.8V at a rate of 1C, and the discharge capacity is record as $C_1$. The prepared lithium ion battery is then charged at $1C_1$ current to 4.35V, then discharged at $1C_1$ for 30 minutes, followed by standing for 180 minutes, and a voltage V1 of the battery after standing is record as $V_1$. Then the battery after standing is subjected to additional current discharge with $5C_1$ for 10 seconds, recording a voltage $V_2$ at the end of the voltage discharge for 10 seconds, the initial impedance R1= $(V_2-V_1)/5C_1$. The prepared lithium ion battery is cycled for 1000 cycles according to a charge-discharge system of charging to 4.35V at a rate of 1C, and then discharging to 2.80 at a rate of 1C for 1000 cycles. Next, the battery after 1000 cycles is discharged to 2.8V at $1C_1$ rate, charged to 4.35V at $1C_1$ rate, then discharged to 2.8V at a rate of $1C_1$, and the discharge capacity is recorded as $C_2$. The prepared lithium ion battery is then charged to 4.35V with a current of $1C_2$, then discharged with a current of $1C_2$ for 30 minutes before standing for 180 minutes, a voltage $V_3$ of the standing battery is recorded. Next, the battery is discharged with a current of $5C_2$ for another 10 seconds, and a voltage $V_4$ at the end of the voltage discharge for 10s is recorded. Impedance after 1000 cycles $R_2$= $(V_4-V_3)/5C_2$. Impedance increase amplitude after 1000 cycles $\Delta R$= $(R_2-R_1)/R_1$. The lower the impedance increase after 1000 cycles of battery cycling, the lower the attenuation of charging capacity during battery use, indicating that the battery has better charging capacity.

Table 1 Characteristics of the positive active materials for Examples 1-14

| Example | Composition | n (mol %) | m (mol %) | n+m (mol %) | n/m | FWHW (003) (°) | FWHW (104) (°) | FWHW(0 03)/ FWHW(1 04) | Kc |
|---|---|---|---|---|---|---|---|---|---|
| Example 1 | $Li_{1.04}Ni_{0.52}Co_{0.0\ 45}Mn_{0.435}O_2$ | 4.5 | 43.5 | 48.0 | 0.103 | 0.088 | 0.097 | 0.907 | 1.66 |
| Example 2 | $Li_{1.04}Ni_{0.78}Co_{0.0\ 3}Mn_{0.19}O_2$ | 3.0 | 19.0 | 22.0 | 0.158 | 0.085 | 0.107 | 0.794 | 1.35 |
| Example 3 | $Li_{1.04}Ni_{0.55}Co_{0.1\ 2}Mn_{0.33}O_2$ | 12.0 | 33.0 | 45.0 | 0.364 | 0.083 | 0.093 | 0.892 | 1.42 |
| Example 4 | $Li_{1.04}Ni_{0.60}Co_{0.1\ 0}Mn_{0.30}O_2$ | 10.0 | 30.0 | 40.0 | 0.333 | 0.084 | 0.099 | 0.848 | 1.36 |
| Example 5 | $Li_{1.04}Ni_{0.598}Co_{0.\ 10}Mn_{0.298}Zr_{0.004}\ O_2$ | 10.0 | 29.8 | 39.8 | 0.336 | 0.086 | 0.098 | 0.878 | 1.66 |
| Example 6 | $Li_{1.04}Ni_{0.583}Co_{0.\ 097}Mn_{0.291}Zr_{0.029}\ O_2$ | 9.7 | 29.1 | 38.8 | 0.333 | 0.087 | 0.092 | 0.946 | 1.57 |
| Example 7 | $Li_{1.04}Ni_{0.594}Co_{0.\ 10}Mn_{0.297}Zr_{0.004}\ Al_{0.005}O_2$ | 10.0 | 29.7 | 39.7 | 0.337 | 0.088 | 0.108 | 0.815 | 1.53 |
| Example 8 | $Li_{1.04}Ni_{0.594}Co_{0.\ 099}Mn_{0.297}Zr_{0.004}\ Al_{0.005}Sr_{0.001}O_2$ | 9.9 | 29.7 | 39.6 | 0.333 | 0.079 | 0.093 | 0.849 | 1.48 |
| Example 9 | $Li_{1.04}Ni_{0.593}Co_{0.\ 099}Mn_{0.296}Zr_{0.004}\ Al_{0.005}Sr_{0.001}W_{0.\ 002}O_2$ | 9.9 | 29.6 | 39.5 | 0.334 | 0.087 | 0.104 | 0.837 | 1.53 |
| Example 10 | $Li_{1.04}Ni_{0.575}Co_{0.\ 139}Mn_{0.277}Zr_{0.003}\ Al_{0.004}Ti_{0.002}O_2$ | 13.9 | 27.7 | 41.6 | 0.502 | 0.084 | 0.096 | 0.875 | 1.62 |
| Example 11 | $Li_{1.04}Ni_{0.624}Co_{0.\ 088}Mn_{0.270}Zr_{0.003}\ Al_{0.009}Ti_{0.004}Sr_{0.\ 001}W_{0.001}O_2$ | 8.8 | 27.0 | 35.8 | 0.326 | 0.081 | 0.099 | 0.818 | 1.45 |
| Example 12 | $Li_{1.04}Ni_{0.668}Co_{0.\ 088}Mn_{0.226}Zr_{0.003}$ $Al_{0.011}Ba_{0.001}Sr_{0\ .001}W_{0.002}O_2$ | 8.8 | 22.6 | 31.4 | 0.389 | 0.087 | 0.101 | 0.861 | 1.43 |
| Example 13 | $Li_{1.04}Ni_{0.710}Co_{0.\ 049}Mn_{0.227}Zr_{0.003}$ $Al_{0.007}Ba_{0.001}Sr_{0\ .001}W_{0.002}O_2$ | 4.9 | 22.7 | 27.6 | 0.216 | 0.088 | 0.107 | 0.822 | 1.30 |
| Example 14 | $Li_{1.04}Ni_{0.594}Co_{0.\ 099}Mn_{0.297}Zr_{0.001}$ $_5Al_{0.0010}Sr_{0.0075}\ O_2$ | 9.9 | 29.7 | 39.6 | 0.333 | 0.081 | 0.992 | 0.082 | 1.53 |

Table 2 Characteristics of Positive Active Materials for Examples 1-15 and Comparative Examples 1-3

| Example | Composition | n (mol %) | m (mol %) | n+m (mol %) | n/m | FWHW (003)(°) | FWHW (104)(°) | FWHW (003)/ FWHW (104) | Kc |
|---|---|---|---|---|---|---|---|---|---|
| Example 15 | $Li_{1.04}Ni_{0.593}Co_{0.0\,99}Mn_{0.296}Zr_{0.004}Al_{0.005}Sr_{0.001}W_{0.\,002}O_2$ | 9.9 | 29.6 | 39.5 | 0.334 | 0.053 | 0.056 | 0.946 | 2.13 |
| Example 16 | $Li_{1.04}Ni_{0.593}Co_{0.0\,99}Mn_{0.296}Zr_{0.004}Al_{0.005}Sr_{0.001}W_{0.\,002}O_2$ | 9.9 | 29.6 | 39.5 | 0.334 | 0.161 | 0.179 | 0.899 | 0.96 |
| Example 17 | $Li_{1.04}Ni_{0.593}Co_{0.0\,99}Mn_{0.296}Zr_{0.004}Al_{0.005}Sr_{0.001}W_{0.\,002}O_2$ | 9.9 | 29.6 | 39.5 | 0.334 | 0.063 | 0.165 | 0.382 | 1.27 |
| Example 18 | $Li_{1.04}Ni_{0.593}Co_{0.0\,99}Mn_{0.296}Zr_{0.004}Al_{0.005}Sr_{0.001}W_{0.\,002}O_2$ | 9.9 | 29.6 | 39.5 | 0.334 | 0.053 | 0.056 | 0.946 | 2.13 |
| Example 19 | $Li_{1.04}Ni_{0.593}Co_{0.0\,99}Mn_{0.296}Zr_{0.004}Al_{0.005}Sr_{0.001}W_{0.\,002}O_2$ | 9.9 | 29.6 | 39.5 | 0.334 | 0.053 | 0.056 | 0.946 | 1.47 |
| Example 20 | $Li_{1.04}Ni_{0.593}Co_{0.0\,99}Mn_{0.296}Zr_{0.004}Al_{0.005}Sr_{0.001}W_{0.\,002}O_2$ | 9.9 | 29.6 | 39.5 | 0.334 | 0.053 | 0.056 | 0.946 | 1.55 |
| Example 21 | $Li_{1.04}Ni_{0.593}Co_{0.0\,99}Mn_{0.296}Zr_{0.004}Al_{0.005}Sr_{0.001}W_{0.\,002}O_2$ | 9.9 | 29.6 | 39.5 | 0.334 | 0.053 | 0.056 | 0.946 | 1.35 |
| Comparative Example 1 | $Li_{1.04}Ni_{0.46}Co_{0.04}$ $Mn_{0.50}O_2$ | 4 | 50 | 54 | 0.080 | 0.091 | 0.099 | 0.919 | 1.38 |
| Comparative Example 2 | $Li_{1.04}Ni_{0.60}Co_{0.03}\,Mn_{0.37}O_2$ | 3 | 37 | 40 | 0.081 | 0.086 | 0.097 | 0.887 | 1.46 |
| Comparative Example 3 | $Li_{1.04}Ni_{0.82}Co_{0.03}\,Mn_{0.15}O_2$ | 3 | 15 | 18 | 0.200 | 0.091 | 0.112 | 0.813 | 1.34 |

Table 3 Positive electrode characteristics and battery test results for Examples 1-21 and Comparative Examples 1-3

| Example | Kf | Kf/Kc | Gram capacity of positive electrode (mAh/g) | 1000 cycle capacity retention rate(%) | Total amount of Mn and Ni ions released from the negative electrode after 1000 cycles of cycling (ppm) | Amplitude of impedance increase after 1000 cycles of cycling(%) |
|---|---|---|---|---|---|---|
| Example 1 | 15.74 | 9.48 | 176.0 | 83.1 | 342.1 | 35.2 |
| Example 2 | 15.39 | 11.40 | 203.8 | 77.5 | 421.7 | 42.3 |
| Example 3 | 15.92 | 11.21 | 178.2 | 84.3 | 285.5 | 28.7 |
| Example 4 | 16.60 | 12.21 | 186.4 | 86.5 | 292.0 | 31.3 |
| Example 5 | 15.91 | 9.58 | 187.2 | 88.6 | 241.3 | 25.1 |
| Example 6 | 14.47 | 9.22 | 178.6 | 90.3 | 198.4 | 21.2 |
| Example 7 | 16.64 | 10.88 | 186.5 | 93.7 | 191.4 | 16.7 |
| Example 8 | 15.88 | 10.73 | 187.2 | 94.9 | 153.7 | 12.6 |
| Example 9 | 16.29 | 10.65 | 188.6 | 96.2 | 126.1 | 6.8 |
| Example 10 | 15.86 | 9.79 | 185.4 | 95.8 | 137.4 | 10.7 |
| Example 11 | 16.07 | 11.08 | 190.7 | 92.5 | 141.8 | 14.5 |
| Example 12 | 16.90 | 11.82 | 196.4 | 92.1 | 159.5 | 13.8 |

(continued)

| Example | Kf | Kf/Kc | Gram capacity of positive electrode (mAh/g) | 1000 cycle capacity retention rate(%) | Total amount of Mn and Ni ions released from the negative electrode after 1000 cycles of cycling (ppm) | Amplitude of impedance increase after 1000 cycles of cycling(%) |
|---|---|---|---|---|---|---|
| Example 13 | 14.17 | 10.90 | 196.1 | 91.5 | 167.2 | 16.7 |
| Example 14 | 16.44 | 10.75 | 187.5 | 87.3 | 224.3 | 24.3 |
| Example 15 | 22.96 | 10.78 | 174.2 | 86.3 | 273.5 | 35.5 |
| Example 16 | 10.13 | 10.55 | 181.2 | 87.9 | 237.9 | 29.6 |
| Example 17 | 13.85 | 10.91 | 187.5 | 77.6 | 358.1 | 38.8 |
| Example 18 | 10.20 | 4.79 | 170.6 | 81.5 | 235.8 | 32.2 |
| Example 19 | 10.58 | 7.20 | 175.3 | 83.5 | 274.6 | 31.5 |
| Example 20 | 13.64 | 8.80 | 176.6 | 84.2 | 279.5 | 34.3 |
| Example 21 | 16.33 | 12.10 | 172.5 | 73.8 | 398.2 | 44.7 |
| Comparative Example 1 | 14.59 | 10.57 | 168.3 | 61.2 | 667.3 | 92.6 |
| Comparative Example 2 | 14.25 | 9.76 | 181.3 | 66.1 | 607.9 | 86.5 |
| Comparative Example 3 | 15.21 | 11.35 | 206.5 | 34.2 | 826.3 | 126.8 |

The following conclusions can be drawn from the data in Tables 1, 2, and 3.

By comparing Example 1 with Comparative Example 1 and Comparative Example 2, the capacity retention rate of the battery prepared by Example 1 after 1000 cycles was 83.1%, which was higher than 61.2% of Comparative Example 1 and 66.1% of Comparative Example 2, indicating that the battery prepared by Example 1 had better cycle stability. The impedance increase of the battery prepared by Example 1 after 1000 cycles was 35.2%, which was lower than 92.6% of Comparative Example 1 and 86.5% of Comparative Example 2, indicating that the battery prepared by Example 1 has better resistance to power attenuation performance. The excellent performance of Example 1 was attributed to its molar content design of cobalt and manganese, resulting in lower total dissolution of Mn and Ni ions in its positive active material. The total amount of Mn and Ni ions dissolved from the negative electrode of the battery prepared by Example 1 after 1000 cycles was 342.1 ppm, which was much lower than the 667.3 ppm of Comparative Example 1 and 607.9 ppm of Comparative Example 2.

By comparing Example 2 with Comparative Example 3, the capacity retention rate of the battery prepared by Example 2 was 77.5% after 1000 cycles, which was higher than the 34.2% of Comparative Example 3, indicating that the battery prepared by Example 2 had a better cycle stability. The impedance increase of the battery prepared by Example 2 after 1000 cycles was 42.3%, which was lower than 126.8% of Comparative Example 3, indicating that the battery prepared by Example 2 had better performance against power decay. The excellent performance of Example 2 benefited from its molar content design of cobalt and manganese, which resulted in a lower total dissolution of Mn ions and Ni ions. The total amount of Mn and Ni ions in the negative electrode plate after 1000 cycles was 421.7 ppm, which was much lower than the 826.3 ppm of Comparative Example 3.

By comparing Example 1 with Example 3, the capacity retention rate of the battery prepared by Example 3 for 1000 cycles was 84.3%, which was higher than the 83.1% of Example 3, indicating that the battery prepared by Example 3 had better cycle stability. The impedance increase of 1000 cycles was 28.7%, which was lower than 35.2% of Example 1, indicating that the battery prepared by Example 3 had better performance to power decay. The excellent performance of Example 3 benefited from its better molar content ratio design of cobalt and manganese, resulting in a lower total dissolution of Mn ions and Ni ions. The total amount of Mn and Ni ions in the negative electrode plate after 1000 cycles of Example 3 preparation was 285.5 ppm, which was lower than the 342.1 ppm of Example 3.

By comparing Example 5 with Example 4, the capacity retention rate of the battery prepared by Example 5 after 1000 cycles was 88.6%, which was higher than 86.5% of Example 4, indicating that the battery prepared by Example 5 had better cycle stability. The impedance increase of the battery prepared by Example 5 after 1000 cycles was 25.1%, lower than 31.3% of Example 4, indicating that the battery prepared by Example 3 had better resistance to power attenuation.

The excellent performance of Example 5 was attributed to the introduction of an appropriate amount of element Zr, which improved the structural stability of the material and lead to a lower total amount of Mn and Ni ions dissolved in its positive active material. The total amount of Mn and Ni ions dissolved from the negative electrode of the battery prepared by Example 5 after 1000 cycles was 241.3 ppm, lower than the 292.0 ppm of Example 4.

By comparing Example 6 with Example 5, the positive electrode capacity of the battery prepared by Example 6 was 178.6 mAh/g, which was much lower than the 186.5 mAh/g of Example 5, indicating that excessive addition of Zr element could affect the energy density of the battery.

By comparing Example 7 with Example 5, the capacity retention rate of the battery prepared by Example 7 after 1000 cycles was 93.7%, which was higher than 88.6% of Example 5, indicating that the battery prepared by Example 7 had better cycle stability. The impedance increase of the battery prepared by Example 7 after 1000 cycles was 16.7%, which was lower than 25.1% of Example 5, indicating that the battery prepared by Example 7 had better resistance to power attenuation. The excellent performance of Example 7 was attributed to the joint introduction of an appropriate amount of elements Zr and Al, which improved the structural stability of the material, resulting in a lower total amount of Mn and Ni ions dissolved from its positive active material. The total amount of Mn and Ni ions released from the negative electrode of the battery prepared by Example 7 after 1000 cycles was 191.4 ppm, which was lower than 241.3 ppm of Example 5.

By comparing Example 8, Example 9, and Example 10 with Example 7, the capacity retention rate of the batteries prepared by Example 8, Example 9, and Example 10 after 1000 cycles were 94.9%, 96.2%, and 95.8%, respectively, higher than 93.7% of Example 7 , indicating that the batteries prepared by Example 8, Example 9, and Example 10 had better cycle stability. The impedance increases of the batteries prepared by Example 8, Example 9, and Example 10 after 1000 cycles were 12.6%, 6.8%, and 10.7%, respectively, lower than 16.7% of Example 7, indicating that the batteries prepared by Example 8, Example 9, and Example 10 had better resistance to power attenuation. The excellent performances of the batteries of Example 8, Example 9, and Example 10 were attributed to the joint introduction of appropriate addition of elements Zr and Al, and the optional addition of elements Ti, Sr, and W, further improving the structural stability of the material, resulting in a lower total amount of ions Mn and Ni dissolved from the positive active material. The total amount of ions Mn and Ni released from the negative electrode plates of batteries prepared by Example 8, Example 9, and Example 10 after 1000 cycles were 153.7 ppm, 126.1 ppm, and 137.4 ppm, respectively, lower than 191.4 ppm of Example 7.

Example 11, Example 12, and Example 13 further demonstrated that by designing the molar ratio of cobalt and manganese, as well as the type and content of additive elements, the battery prepared with the synthesized positive active material exhibited high positive electrode material capacity, high capacity retention rate, and better resistance to power attenuation. The positive electrode gram capacities of Example 11, Example 12, and Example 13 were 190.7 mAh/g, 196.4 mAh/g, and 196.1 mAh/g, respectively. The capacity retention rates for 1000 cycles of Example 11, Example 12, and Example 13 were 92.5%, 92.1%, and 91.5%, respectively. The impedance increases for 1000 cycles of Example 11, Example 12, and Example 13 were 14.5%, 13.8%, and 16.7%, respectively.

By comparing Example 14 with Example 8, the capacity retention rate of the battery prepared by Example 8 after 1000 cycles was 94.9%, which was higher than 87.3% of Example, indicating that the battery prepared by Example 8 had better cycle stability. The impedance increase of the battery prepared by Example 8 after 1000 cycles was 12.6%, which was lower than 25.1% of Example 1, indicating that the battery prepared by Example 8 had better resistance to power attenuation. The excellent performance of Example 8 was attributed to the addition of elements Zr and Al in an appropriate range, which could improve the structural stability of the material, resulting in a lower total amount of Mn and Ni ions dissolved in its positive active material. The total amount of ions Mn and Ni released from the negative electrode of the battery prepared by Example 8 after 1000 cycles was 153.7 ppm, which was lower than 224.3 ppm of Example 5.

By comparing Example 15 with Example 9, the capacity retention rate of the battery prepared by Example 9 after 1000 cycles was 96.2%, which was higher than 86.3% of Example 15, indicating that the battery prepared by Example 9 had better cycle stability. The impedance increase of the battery prepared by Example 9 after 1000 cycles was 6.8%, lower than 35.5% of Example 15, indicating that the battery prepared by Example 9 had better resistance to power attenuation. The excellent performance of Example 9 was attributed to its suitable FWHW (003) and FWHW (104) designs, which could improve the structural stability of the material, resulting in lower total dissolution of Mn and Ni ions in its positive active material. The total amount of Mn and Ni ions dissolved from the negative electrode of the battery prepared by Example 9 after 1000 cycles was 126.1 ppm, lower than the 273.5 ppm of Comparative Example 15. Meanwhile, when FWHW (003) and FWHW (104) were too low, it indicated that the growth of positive active material particles was excessive, leading to a decrease in kinetics and affecting the gram capacity of positive active material. Compared with Example 9, Example 15 had a positive electrode material capacity of 188.6 mAh/g, which was much higher than 174.2 mAh/g of Example 15..

By comparing Example 16 with Example 9, the capacity retention rate of the battery prepared by Example 9 after 1000 cycles was 96.2%, which was higher than 87.9% of Example 16, indicating that the battery prepared by Example 9 had better cycle stability. The impedance increase of the battery prepared by Example 9 after 1000 cycles was 6.8%, which was lower than 29.6% of Example 16, indicating that the battery prepared by Example 9 had better resistance to power attenuation. The excellent performance of Example 9 was attributed to its suitable FWHW (003) and FWHW (104) designs, which could improve the structural stability of the material, resulting in a lower total amount of Mn and Ni ions dissolved in its positive active material. The total amount of Mn and Ni ions released from the negative electrode of the battery prepared by Example 9 after 1000 cycles was 126.1 ppm, which was lower than 237.9 ppm of Example 16.

By comparing Example 9 with Example 17 to Example 21, the capacity retention rate of the battery prepared by Example 9 after 1000 cycles was 96.2%, which was higher than 77.6% of Example 17 and 81.5% of Example 18, indicating that the battery prepared by Example 9 had better cycle stability. The impedance increase of the battery prepared by Example 9 after 1000 cycles was, which was lower than 38.8% in Example 17 and 32.3% in Example 18, indicating that the battery prepared by Example 9 had better resistance to power attenuation. The excellent performance of Example 9 benefited from its suitable positive active material Kc and positive electrode composite agent layer Kf design, resulting in a lower total dissolution of Mn and Ni ions. The total amount of Mn and Ni ions dissolved after 1000 cycles was 126.1 ppm, which was lower than 358.1 ppm of Example 17 and 235.8 ppm of Example 18.

The introduction provided by the above steps is only intended to help understand the methods, structure, and core ideas of the present disclosure. For ordinary technical personnel in this field, without departing from the principle of The present disclosure, several improvements and modifications can be made to the present disclosure, which also fall within the scope of protection of the claims of the present disclosure .

## Industrial application

The present disclosure has the following beneficial technical effects:

1. It can reduce the dissolution of transition metal elements nickel, manganese, and cobalt in positive active materials, improve the charging capacity, cycle life, and safety performance of batteries. For positive active material, when the Ni content in the material is relatively high, the depth of lithium removal and intercalation in the material increases, and the structural stability of the material is poor; when the Mn content increases, the surface protective film of the negative electrode is easily damaged due to the dissolution of Mn, leading to an increase in impedance, improving the risk of lithium evolution, reducing the charging capacity, cycle life, and safety performance of the battery. By adding the amount and the composition of elements through reasonable design, the dissolution of metal ions during the use of positive active materials can be suppressed, and the charging capacity, cycle life, and safety performance of batteries can be improved.

2. It can reduce the microcracks generated on positive electrode particles during the processing of positive electrode plates, while ensuring that the positive electrode has good charging capacity, cycle life, and safety performance. The appropriate ratio of positive electrode compaction to positive electrode powder compaction can ensure good electrical contact between positive active material particles and conductive agents, while reducing the number of slip cracks in positive active material particles. When the ratio of positive electrode compaction to positive electrode powder compaction is low, the electrical contact area between positive electrode particles and between positive electrode particles and conductive agent is insufficient, resulting in a high ohmic internal resistance of the positive electrode composite agent layer, which affects the charging performance of the battery. When the ratio of electrode plate compaction and positive electrode powder compaction is high, the compaction of the positive electrode composite agent layer is higher, which can easily lead to the formation of slip cracks in positive active material particles, leading to the deterioration of the electrolyte and the dissolution of transition metals, affecting charging capacity, cycle life, and safety performance.

## Claims

**1.** A positive active material, comprising a lithium nickel cobalt manganese oxide;
in the lithium nickel cobalt manganese oxide, based on the total molar content of the nickel element, the cobalt element and the manganese element being 100%, a molar content of the manganese element being denoted as m%, a molar content of the cobalt element being denoted as n%, satisfying the following condition: 20<n+m<50, and 0.1<n/m<0.6;
a full width at half maximum of (003) peak of the positive active material being denoted as FWHW(003), a full width at half maximum of (104) peak of the positive active material being denoted as FWHW(104); the FWHW(003) and the FWHW(104) satisfying the following condition: $0.4 \leq \text{FWHW}(003)/\text{FWHW}(104) \leq 2.0$.

**2.** The positive active material according to claim 1, wherein, m and n satisfy any one of the following conditions:

$$(i)19 \leq m < 43.5;$$

$$(ii) 3.0 \leq n \leq 12;$$

$$(iii) 0.10 \leq n/m \leq 0.502.$$

3. The positive active material according to claim 1 or 2, wherein, the positive active material further comprises M element, the M element comprising Zr element, and at least one element of Al, Mg, Ti, Y, Sr, Y, Mo, Nb, Sn, Ba, La, and Ce; and

   based on the total molar content of the nickel element, the cobalt element and the manganese element being 100%, a percent ratio of the molar content of the M element to the total molar content of the nickel element, the cobalt element and the manganese element is denoted as x%, $0.1 \leq x \leq 2.5$.

4. The positive active material according to claim 3, wherein, the M element comprises Zr element, Al element, and at least one element of Mg, Ti, Y, Sr, Y, Mo, Nb, Sn, Ba, La, Ce, and W; wherein a molar content of the M element is denoted as x%, a molar content of Zr element is denoted as x1%, a molar content of Al element is denoted as x2%, and x, x1, and x2 satisfy any one of the following conditions:

$$(iv) 0.20 \leq x1 \leq 0.45;$$

$$(v) 0.15 \leq x2 \leq 1.5;$$

$$(vi) 0.2 \leq x1/x2 \leq 1;$$

$$(vii) 0 < (x-x1-x2)/x < 0.5.$$

5. The positive active material according to claim 1 or 2, wherein, a full width at half maximum of (003) peak of the positive active material is denoted as FWHW(003), and a full width at half maximum of (104) peak of the positive active material is denoted as FWHW(104);

   the FWHW(003) ranges from 0.06 to 0.15°; and
   the FWHW(104) ranges from 0.06 to 0.15°.

6. The positive active material according to claim 1 or 2, wherein, a peak area of (003) peak of the positive active material is denoted as Ic(003), a peak area of (104) peak of the positive active material is denoted as Ic(104), Kc is Ic(003)/Ic(104), $1 \leq Kc \leq 2$.

7. The positive active material according to claim 3, wherein, the positive active material comprises $Li_a Ni_{b-} Co_{m/100} Mn_{n/100} M_{x/100} O_2$, $0.80 \leq a \leq 1.10$, $0.4 < b < 0.8$, $20 < n+m < 50$, and $0.1 < n/m < 0.6$, $0.1 \leq x \leq 2.5$, and M comprises Zr and at least one of Al, Mg, Ti, Y, Sr, Y, Mo, Nb, Sn, Ba, La, Ce, and W.

8. A secondary battery, comprising a positive electrode; wherein, the positive electrode comprises a positive electrode current collector and a positive electrode composite agent layer disposed on the positive electrode current collector, and the positive electrode composite agent layer comprises the positive active material according to any one of claims 1 to 7.

9. The secondary battery according to claim 8, wherein, a peak area of (003) peak of the positive electrode composite agent layer is denoted as If(003), a peak area of (104) peak is denoted as If(104), Kf is If(003)/If(104), $10 \leq Kf \leq 20$, and $6 \leq Kf/Kc \leq 20$.

10. The secondary battery according to claim 8, wherein, a peak area of (003) peak of the positive electrode composite agent layer is denoted as If(003), a peak area of (104) peak is denoted as If(104), Kf is If(003)/If(104), and $6 \leq Kf/Kc \leq 20$.

11. The secondary battery according to claim 8, wherein in the positive electrode composite agent layer, the number of particles formed in 1 micron to 3 micron is more than 60% of the total number of particles.

**12.** An electrical device, comprising any one of the secondary battery according to any one of claims 8 to 11.

## INTERNATIONAL SEARCH REPORT

| International application No. |
|---|
| **PCT/CN2022/139467** |

| A. | CLASSIFICATION OF SUBJECT MATTER |
|---|---|

H01M4/525(2010.01)i; H01M10/0525(2010.01)i; H01M4/36(2006.01)i; H01M4/505(2010.01)i

According to International Patent Classification (IPC) or to both national classification and IPC

| B. | FIELDS SEARCHED |
|---|---|

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNKI, DWPI, ENTXT, CNTXT, ENTXTC: 镍, 钴, 锰, Ni, Co, Mn, 三元, 半峰宽, FWHW, 峰面积, 强度, Ni??Co??Mn??, "003", "104", nickel, cobalt, manganese, Ni, Co, Mn, ternary, width at half maximum, peak area, intensity

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114759183 A (ENVISION POWER TECHNOLOGY (JIANGSU) CO., LTD. et al.) 15 July 2022 (2022-07-15) <br> description, paragraphs 4-101, and embodiment 1 | 1-2, 5, 8, 12 |
| Y | CN 114759183 A (ENVISION POWER TECHNOLOGY (JIANGSU) CO., LTD. et al.) 15 July 2022 (2022-07-15) <br> description, paragraphs 4-101, and embodiment 1 | 3-4, 6-7, 9-11 |
| Y | CN 109244365 A (YANTAI ZHUONENG LITHIUM BATTERY CO., LTD.) 18 January 2019 (2019-01-18) <br> description, paragraphs [0006]-[0076] | 3-4, 6-7, 9-11 |
| X | CN 114709413 A (ENVISION POWER TECHNOLOGY (JIANGSU) CO., LTD. et al.) 05 July 2022 (2022-07-05) <br> description, paragraphs 5-71, and figure 1 | 1-2, 6, 8, 12 |
| A | JP 2013143358 A (TOYOTA MOTOR CORP.) 22 July 2013 (2013-07-22) <br> entire document | 1-12 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 August 2023** | **11 August 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/139467**

| Patent document cited in search report | | | Publication date (day/month/year) | Patent family member(s) | | | Publication date (day/month/year) |
|---|---|---|---|---|---|---|---|
| CN | 114759183 | A | 15 July 2022 | None | | | |
| CN | 109244365 | A | 18 January 2019 | CN | 109244365 | B | 07 December 2021 |
| CN | 114709413 | A | 05 July 2022 | None | | | |
| JP | 2013143358 | A | 22 July 2013 | JP | 5682796 | B2 | 11 March 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211523409